(19) Europäisches Patentamt / European Patent Office / Office européen des brevets

(11) **EP 2 248 681 B1**

(12) **EUROPEAN PATENT SPECIFICATION**

(45) Date of publication and mention
of the grant of the patent:
**23.01.2013 Bulletin 2013/04**

(21) Application number: **09708172.3**

(22) Date of filing: **04.02.2009**

(51) Int Cl.:
*B60C 3/06* (2006.01)       *B60C 5/00* (2006.01)
*B60C 9/08* (2006.01)       *B60C 11/00* (2006.01)

(86) International application number:
**PCT/JP2009/051899**

(87) International publication number:
**WO 2009/099108 (13.08.2009 Gazette 2009/33)**

(54) **STUDLESS TIRE**

SPIKELOSER REIFEN

PNEU SANS CLOU

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(30) Priority: **04.02.2008 JP 2008023920**

(43) Date of publication of application:
**10.11.2010 Bulletin 2010/45**

(73) Proprietor: **Bridgestone Corporation
Tokyo 104-8340 (JP)**

(72) Inventors:
• **WATABE, Ryoichi
Kodaira-shi
Tokyo 187-8531 (JP)**
• **KUROKAWA, Makoto
Kodaira-shi
Tokyo 187-8531 (JP)**

(74) Representative: **Waldren, Robin Michael et al
Marks & Clerk LLP
90 Long Acre
London
WC2E 9RA (GB)**

(56) References cited:
**WO-A1-2007/072924    WO-A1-2008/001913
JP-A- 61 188 203       JP-A- 2003 191 710
JP-A- 2007 015 596     JP-A- 2009 090 912**

**Description**

TECHNICAL FIELD

The present invention relates to a studless tire to be attached to a vehicle for running on icy and snowy roads, and particularly to one capable of improving straight-running stability.

RELATED ART

In order to enhance a driving performance on icy and snowy roads while maintaining drivability on dry roads, a studless tire is provided with multiple sipes and/or made of extremely soft rubber to suppress the tread rigidity (see JP 2007176417 A). Attention is also drawn to the disclosure of JP61-188,203.

DISCLOSURE OF THE INVENTION

However, due to the low tread rigidity, the studless tire does not have sufficient straight-running stability, for which an improvement is demanded. However, if the tread rigidity is improved to be higher, a required driving performance on icy and snowy roads cannot be achieved.

The present invention addresses these drawbacks, and is intended to provide a studless tire capable of enhancing straight-running stability with a low tread rigidity.

In order to realize the above-mentioned object, a studless tire according to the present invention comprises an inner half portion and an outer half portion in a width direction of a vehicle under a condition where the tire is attached to the vehicle, wherein sectional shapes of the inner and outer half portions are formed so as to have a degree of asymmetricity within a given range. Such asymmetric tires have been known as summer tires, but have not yet realized as studless tires. High driving performances on icy and snowy roads are required for studless tires, so that modulus of elasticity of winter tires is remarkably smaller than that of summer tires. It is, therefore, difficult for studless tires to employ the means for asymmetrization applied to summer tires as it is. The object of the present is, thus, to provide a asymmetrizing means which is capable of enhancing a straight-running stability and further optimum for studless tires having remarkably low tread rigidities.

<1> A studless tire according to a first aspect of the present invention is as claimed in claim 1.

<2> In the studless tire described in <1>, a periphery length along an inner surface of the tire is preferably longer in the widthwise half portion in the vehicle installation outer side and shorter in the widthwise half portion in the vehicle installation inner side, and a difference between the periphery lengths is not more than 2%.

<3> In the studless tire described in <1> or <2>, it is preferred that a degree of asymmetricity of a side-shape X expressed by equation (1) and a degree of asymmetricity of a contact-shape Y expressed by equation (2) satisfy a relationship expressed by equation (3):

$$X = \frac{Xd - Xc}{2} \qquad (1)$$

$$Y = \frac{C - D}{C + D} \qquad (2)$$

$$0.7 \le \left| \frac{Y - 0.045}{X} \right| \le 1.0 \qquad (3)$$

where Xd is a side-shape coefficient of the vehicle installation outer side, Xc is a side-shape coefficient of the vehicle installation inner side, C and D are ground contact lengths of a ground contact surface of the tire at the vehicle installation inner side and the vehicle installation outer side, respectively, measured at positions spaced 40% of a ground contact width from the width center of the ground contact surface under a condition that the tire contacts the ground with a camber angle of -0.5 degree while the predetermined inner pressure and a predetermined load are applied thereto.

According to the tire described in <1>, the degree of asymmetricity of the side-shape X is between 1.0 and 5.0, so that as described hereinafter in detail, straight-running stability can be improved without causing uneven wear.

According to the tire describe in <2>, the periphery length along the inner surface of the tire is longer in the widthwise half portion in the vehicle installation outer side and shorter in the widthwise half portion in the vehicle installation inner side, so that as described hereinafter in detail, straight-running stability can be further improved. Moreover, a difference between the periphery lengths at the vehicle installation inner and outer sides is not more than 2%, so that both of a ground contact performance and a transmission performance of a steering force to the road surface can be compatible with each other. Longer periphery length at the vehicle installation outer side may diminish the transmission performance of a steering force to the road surface.

According to the tire described in <3>, a tread rigidity factor Z defined as (Y-0.045)/X in equation (3) is between 0.7 and 1.0, so that as described hereinafter in detail, both of ice and snow performance and straight-running stability can be ensured.

## BRIEF DESCRIPTION OF THE DRAWINGS

FIG. 1 is a widthwise sectional view of the a tire according to the present invention;
FIG. 2 shows a ground contact shape of a tire having symmetric sidewall shapes; and
FIG. 3 shows a ground contact shape of a tire having asymmetric sidewall shapes.

## REFERENCE SYMBOLS

1   bead portion
2   sidewall portion
3   tread portion
4   radial carcass
5   bead core
6   studless tire

## BEST MODE FOR CARRYING OUT THE INVENTION

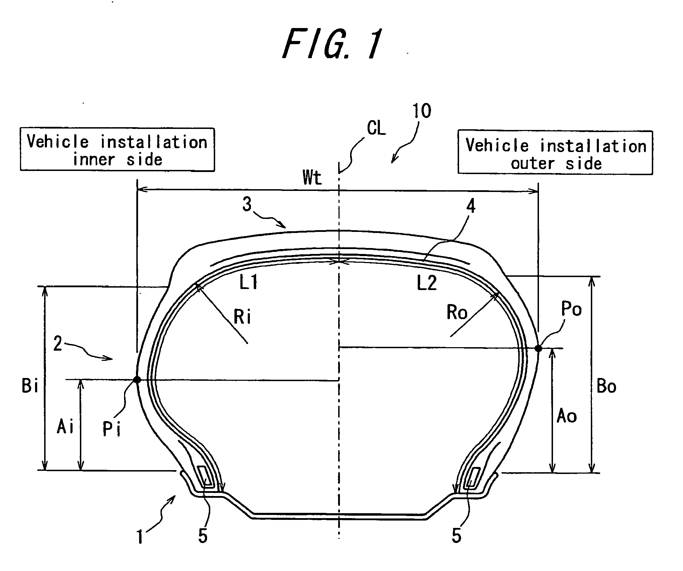

FIG. 1 is a sectional view of a studless tire according to an embodiment of the present invention, taken in a section passing the central axis line under a condition where the tire is mounted on a predetermined rim and a predetermined inner pressure is charged thereto. The studless tire 10 has a pair of bead portions 1, a pair of sidewall portions 2 disposed radially outside of the bead portions 1, and a tread portion 3 disposed to bridge the sidewall portions 2. Each of the bead portions 1 is provided with a bead core 5. A radial carcass 4 extends between the bead cores 5 and side portions of the radial carcass 4 are turned around the respective bead cores 5 to anchor the radial carcass 4 to the bead cores 5.

The studless tire 10 according to the present invention is **characterized in that**, in a section passing a central axis line under a condition where the tire is mounted on the predetermined rim 11 and a predetermined inner pressure is charged therein, the inner sidewall portion and the outer sidewall portion in the width direction of the vehicle under a condition where the tire is attached to the vehicle have mutually different shapes. In particular, assuming that distances Ao and Ai are measured from a position where a bladder ring is divided to position Po, Pi where a maximum tire width is obtained along the tire radial direction and distances Bo, Bi are measured from the position where the bladder ring is divided to positions where a tread ring is divide along the tire radial direction, side-shape coefficients of the tire are defined as ratios Ao/Bo and Ai/Bi, the side-shape coefficient Ao/Bo of the widthwise half portion disposed at a vehicle installation outer side is between 0.52 and 0.55 and the side-shape coefficient Ai/Bio of the widthwise half portion disposed at a vehicle installation inner side is between 0.45 and 0.50, or the side-shape coefficient AoBo of the widthwise half portion disposed at a vehicle installation outer side is between 0.5 and 0.55 and the side-shape coefficient Ai/Bio of the widthwise half portion disposed at a vehicle installation inner side is between 0.45 and 0.48.

Assuming that Xd (=Ao/Bo) is the side-shape coefficient of the vehicle installation outer side and Xc (=Ai/Bi) is the side-shape coefficient of the vehicle installation inner side, a degree of side asymmetricity X expressed by equation (1) can be used as a factor expressing a degree of asymmetricity of the shapes of the sidewall portions. The degree of side asymmetricity X is 0.05 for Xd of 0.55 and Xc of 0.45, 0.01 for Xd of 0.5 and Xc of 0.48, and 0.01 for Xd of 0.52 and Xc of 0.5, so that the degree of side asymmetricity X of the tire according to the present invention should be between 0.01 and 0.05.

It is noted that Po represents a point where the maximum tire width Wt is obtained at the vehicle installation outer side and Pi represents a point where the maximum tire width Wt is obtained at the vehicle installation inner side.

The above-mentioned predetermined inner pressure and rim are defined in the following manner. That is, the predetermined internal pressure refers to an air pressure corresponding to a predetermined at an applicable size load and specified in a predetermined industrial standard, and the predetermined rim refers to a standard rim (or "approved rim", "recommended rim") for an applicable size specified the same industrial standard. The above-mentioned predetermined load refers to a maximum load (maximum load capacity) of a single wheel of an applicable size specified in the same industrial standard.

Regarding the industrial standard, an effective standard is set in each region where the tire is manufactured or used. Examples of such standards are "The Tire and Rim Association Inc. Year Book" (including design guides) in the U.S.A., "The European Tyre and Rim Technical Organisation Standards Manual" in Europe, and "JATMA YEAR BOOK" edited by the Japan Automobile Tyre Manufacturer Association in Japan.

The term "a widthwise half portion" of the tire as used herein refers to each of left and right half portions defined by a plane CL passing through the width center of the rim and perpendicular to a central axis of rotation of the tire under a condition where the tire is attached to a vehicle and the predetermined internal pressure is charged thereto.

The term "a position where a bladder ring is divided" as used herein refers to a position on the surface of the tire corresponding to a border between the bladder ring and the side mold constituting the vulcanization mold for vulcanizing the tire. There is formed a minute projection extending along the circumferential direction due to the border.

The term "a position where a tread ring is divided" as used herein refers to a position on the surface of the tire corresponding to a border between the tread ring and the side mold constituting the vulcanization mold for vulcanizing the tire. There is formed a minute projection extending along the circumferential direction due to the border.

Next, an operation of the studless tire 10 according to the present invention will be discussed. In general, when tires are installed to a vehicle, the tires are inclined such that their lower parts contacting a road surface are toward the outer side of the vehicle and their upper parts are toward the inner side of the vehicle to ensure straight-running stability. As viewed from the front side of the vehicle, the tires have a chevron-shaped posture on the vehicle, i.e. are provided with so-called negative cambers.

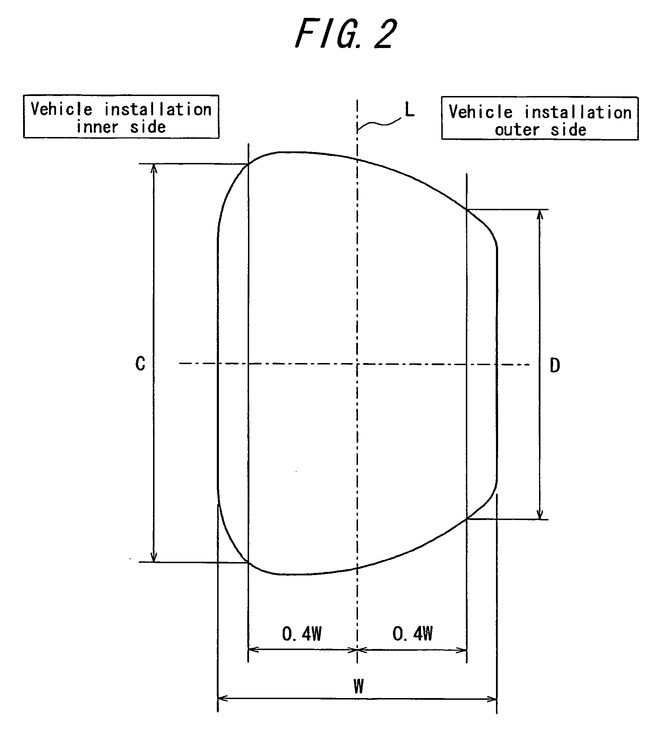

When tires with zero side asymmetricity, i.e. tires having symmetric shapes of the sidewall portions with respect to the vehicle installation inner and outer sides are attached with providing negative cambers as discussed above, contacting pressure is distributed as shown in FIG. 2. The region at the vehicle installation inner side has higher contact pressure and longer contact length and the region at the vehicle installation outer side has smaller contact pressure and shorter contact length with the central axis line on the ground contacting face of the tire being as their border.

As far as the tires are driven while maintaining the symmetric ground contact shapes, no lateral force is generated on each of the tires and thus no force laterally displacing the vehicle is generated even if a load balance between the right and left tires on the vehicle is changed due to a noise input force from the road surface. However, when the tires are driven with the above-mentioned asymmetric ground contact shapes, a lateral force is generated on each tire. The lateral forces generated on the right and left tires cancel each other to maintain the straight-running stability of the vehicle. In this condition, a noise input from the road surface to either one of the right and left tires loses the balance between the lateral forces of the right and left tires, so that a lateral force is apt to occur on the vehicle.

Thus, in order to improve the straight-running stability, it is necessary to improve the symmetry between the right and left ground contact shapes with respect to the central line of the ground contacting surface of the tire in the width direction. The present invention is completed in view of this fact and employs a means for improving the symmetry between the right and left ground contacting shapes in which the rigidity of the half portion at the vehicle installation outer side is smaller than that of the half portion at the vehicle installation inner side to protrude the tread half portion at the vehicle installation outer side more than the tread half portion at the vehicle installation inner side.

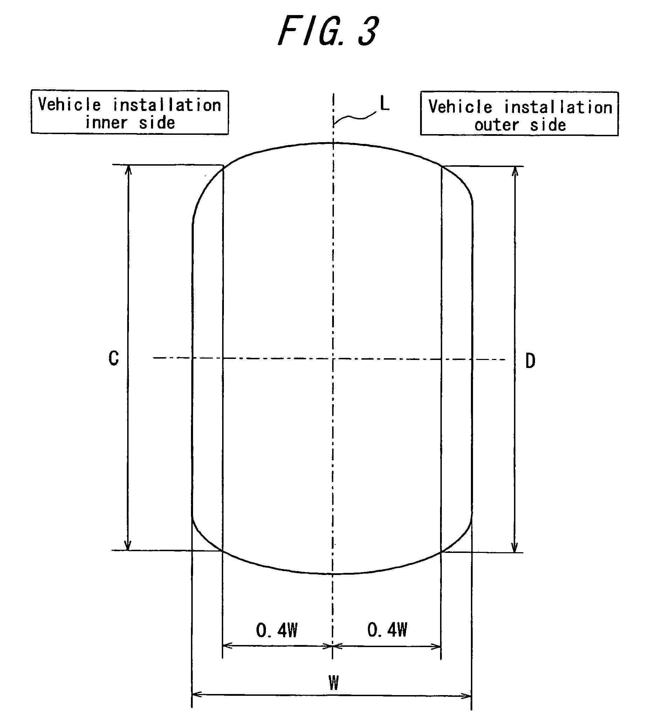

The first measure for differentiating the amounts of protrusion of the right and left tread half portions is as follows. The tire contacts the road surface with a camber angle of -0.5 degrees under a condition that the predetermined inner pressure and a predetermined load are applied, as shown in FIG. 2. The ground contact lengths C, D of the vehicle installation inner and outer sides, respectively, are measured at the position spaced 40% of a ground contact width from the width center line L of the ground contact surface, and the degree of asymmetricity of a contact-shape Y is obtained from equation (2). If the degree of asymmetricity of a side shape X is zero under a condition where no load is applied to the tire, the degree of asymmetricity of the ground contact shapes Y becomes extremely large under a condition where a negative camber and a load are applied to the tire. To the contrary, in the present invention, the tire has asymmetric shapes of the sidewall portions with no load applied thereto so that the side-shape coefficient of the vehicle installation outer side Xd is larger than the side-shape coefficient of the vehicle installation inner side Xc. As shown in FIG. 3, the degree of asymmetricity of the ground contact shape Y can be suppressed to, thereby, improve straight-running stability.

In other words, the first measure lowers the rigidity of the half portion at the vehicle installation outer side by increasing the side shape coefficient of the half portion at the vehicle installation outer side. The mechanism is discussed in the next. That is, the half portion at the vehicle installation outer side, which has large side shape coefficient, has smaller radius of curvature Ro of the shoulder portion than radius of curvature Ri of the shoulder portion of the half portion at the vehicle installation inner side, as shown in FIG. 1. Assuming that the radial carcass 4 bears most of the tire internal pressure P, a circumferential stress T give by equation (4) expressing a circumferential stress on a thin cylinder is applied to the radial carcass 4 with a thickness t and radius of curvature R. Thus, the half portion at the vehicle installation inner side with a larger radius of curvature has a larger circumferential stress T and the half portion at the vehicle installation outer side with a smaller radius of curvature has a smaller circumferential stress T.

$$T = P \cdot \frac{R}{t} \qquad\qquad (4)$$

In this way, according to the first measure, the circumferential stress T of the radial carcass 4 of the half portion at the vehicle installation outer side can be reduced by making the side-shape coefficient Xd at the vehicle installation outer side bigger than the side-shape coefficient Xc at the vehicle installation inner side. As a result, the rigidity of the whole half portion at the vehicle installation outer side can be decreased to protrude the tread portion more than the half portion at the vehicle installation inner side.

It is noted that in equation (2) representing the degree of asymmetricity of the ground contact shape Y, C and D are defined as ground contact lengths of a ground contact surface of the tire at the vehicle installation inner side and the vehicle installation outer side, respectively, measured at positions spaced 40% of the entire ground contact width W from the width center M of the ground contact surface under a condition. If these lengths are the same, the degree of asymmetricity of the ground contact surface is zero.

As described above, straight-running stability can be improved by optimizing the side-shape coefficients Xd, Xc. Specific ranges of the optimum side-shape coefficients Xd, Xc of the studless tire are 0.52-0.55 for the side-shape coefficients Xd at the vehicle installation outer side and 0.45-0.5 for the side-shape coefficients Xc at the vehicle installation inner side; or 0.5-0.55 for the side-shape coefficients Xd at the vehicle installation outer side and 0.45-0.48 for the side-shape coefficients Xc at the vehicle installation inner side. In a case where Xd is below 0.52 and Xc is over 0.5 or where Xd is below 0.5 and Xc is over 0.48, the degree of asymmetricity of the side-shape X is too small to improve straight-running stability. On the other hand, in a case where Xd is over 0.55 or Xc is below 0.45, the degree of asymmetricity of the side-shape X is so large that the degree of asymmetricity of the ground contact shape Y becomes large, which deteriorates straight-running stability and likely cause uneven wear.

In the above description, the degree of asymmetricity of the side-shape X optimum for suppressing the degree of asymmetricity of the ground contact shape Y to improve the symmetry of the ground contact shape depends largely to the tread rigidity. Thus, a degree of asymmetricity of a side-shape X of a summer tire having high tread rigidity cannot be applied to a studless tire of which tread rigidity should be suppressed to secure an ice and snow performance. In addition, in a studless tire, the degree of asymmetricity of the side-shape X needs to be optimized in view of the fact that straight-running stability may be deteriorated only due to a low tread rigidity. Owing to these points, an optimization of the asymmetricity of a studless tire is far complicated than that of a summer tire.

As discussed above, the tread rigidity of the studless tire needs to be sufficient for securing a ice and snow performance. The relationship between the degree of asymmetricity of the ground contact shape Y and the degree of asymmetricity of the side-shape X greatly rely on the tread rigidity, which allows the tread rigidity of the studless tire to be set within a preferable range. More specifically, a rigidity factor Z which experimentally precisely represents the tread rigidity and is defined as (Y-0.045)/X in equation (3) is preferably between 0.7 and 1.0. It is noted that Y and X represent the above-mentioned degree of asymmetricity of the side shape and degree of asymmetricity of the ground contact shape.

The second measure for differentiating the amounts of protrusion of the right and left tread half portions is as follows. In the studless tire 10, the periphery length L2 along the inner tire surface of the half portion at the vehicle installation outer side (see FIG. 1) is set to be longer than the periphery length L1 along the inner tire surface of the half portion at the vehicle installation inner side (see FIG. 1). Such configuration makes it possible to further protrude the tread portion of the half portion at the vehicle installation outer side more than the half portion at the vehicle installation inner side, which is further preferable. This is because the longer periphery length gives a softer spring property of the half portion against a load acting in the tire radial direction. In this way, by making the periphery length L2 along the tire inner surface of the half portion at the vehicle installation outer side longer than the periphery length L1 of the half portion at the vehicle installation inner side, the rigidity of the half portion at the vehicle installation outer side can be decreased and, as a result, the tread portion can be protruded more than the half portion at the vehicle installation inner side. However, a larger difference between L1 and L2 will yield a softer spring property in the tire width and circumstance directions to reduce the transmission capability of steering. Thus, the difference is preferably 2% or less.

EXAMPLES

Studless tires, the difference of which was only the degree of asymmetricity of the side-shape, were experimentally prepared, and the degrees of asymmetricity of the side-shape Y and various motion performances of the tires were evaluated with the tires being installed to actual vehicles. The specifications of the tires and the results of evaluation are shown in Table 1. The experimentally prepared tires had a tire size of 195/65R15.

When the tires were installed to the vehicle, the studless tires were mounted on rims with size of 6J and a predetermined internal pressure which was 200 kPa was charged in the tires.

The degree of asymmetricity Y of the ground contact shape was measured under a condition of an applied load: 4.71 N and a camber angle: -0.5 degrees according to the definition.

After the tire of the above-mentioned size was installed to a rear-drive vehicle and then a load, which is a drive and a 60 kg weight on the passenger seat, was applied, the actual vehicle evaluation was conducted. In order to evaluate uneven wear resistance, the tire was driven on a drum testing machine at 80 km/h with the above-mentioned camber angle, and the amount of wear at the vehicle installation inner side was measured after running 400 km. The results are indicated in index values with the amount of wear of the comparative example being set to 100. The larger index value means the larger amount of wear and thus less uneven wear resistance.

The drivability on dry roads and snow roads were comprehensively evaluated by the driver based on preciseness of vehicle behaviors and response rates in corners on a scale of one to ten.

The straight-running stability on dry roads and snow roads were comprehensively evaluated by the driver based on stability of the vehicle in straight roads and response rate upon slightly steering on a scale of one to ten.

The braking performance on snow roads were evaluated with a vehicle equipped with anti-lock brake system by measuring the braking distance from 40 km/h at full brake application. The results are indicated in index values with the result of comparative example being set to 100. The larger the index value is, the higher the braking performance is.

Table 1

| | Comparative Example | Example 1 | Example 2 | Example 3 |
|---|---|---|---|---|
| Side-shape coefficient Xe of the vehicle installation inner side | 0.50 | 0.465 | 0.50 | 0.465 |
| Side-shape coefficient Xd of the vehicle installation outer side | 0.50 | 0.535 | 0.535 | 0.50 |
| Degree of asymmetricity of the side-shape X | 0 | 0.035 | 0.0175 | 0.0175 |
| Degree of asymmetricity of the ground contact shape Y | 4.5% | 1.5% | 3.0% | 3.0% |
| Straight-running stability (dry) | 4.5 | 5.0 | 4.7 | 4.7 |
| Straight-running stability (snow) | 5.0 | 5.5 | 5.3 | 5.3 |
| Drivability (dry) | 4.5 | 4.8 | 4.6 | 4.7 |
| Drivability (wet) | 4.5 | 4.7 | 4.5 | 4.6 |
| Braking performance | 100 | 101 | 100 | 100 |
| Uneven wear resistance | 100 | 95 | 99 | 99 |

**Claims**

1. A studless tire (10) wherein in a section passing a central axis line (L) under a condition where the tire is mounted on a predetermined rim and a predetermined inner pressure is charged therein, assuming that a distance A is measured from a first minute projection extending along the circumferential direction at a position on the surface of the tire corresponding to a border between the bladder ring and the side mold constituting the vulcanization mold for vulcanizing the tire to a position where a maximum tire width is obtained along the tire radial direction and a distance B is measured from the first minute projection to a second minute projection extending along the circumferential direction at a position on the surface of the tire corresponding to a border between the tread ring and side mold constituting the vulcanization mold for vulcanizing the tire along the tire radial direction, a side-shape coefficient of the tire defined as a ratio A/B in a state where the tire is installed on a vehicle is between 0.52 and 0.55 in a widthwise half portion disposed at a widthwise outer side of the vehicle, hereinafter referred to as "vehicle installation outer side" (Xd), and between 0.45 and 0.50 in a widthwise half portion disposed at a widthwise inner side of the vehicle, hereinafter referred to as "vehicle installation inner side" (Xc), or between 0.5 and 0.55 in a widthwise half portion disposed at the vehicle installation outer side and between 0.45 and 0.48 in a widthwise half portion disposed at the vehicle installation inner side.

2. The studless tire according to claim 1, wherein a periphery length along an inner surface of the tire is longer in the widthwise half portion in the vehicle installation outer side and shorter in the widthwise half portion in the vehicle installation inner side, and a difference between the periphery lengths is not more than 2%.

3. The studless tire according to claim 1 or 2, wherein a degree of asymmetricity of a side-shape X expressed by equation (1) and a degree of asymmetricity of a contact-shape Y expressed by equation (2) satisfy a relationship expressed by equation (3):

$$X = \frac{Xd - Xc}{2} \qquad (1)$$

$$Y = \frac{C - D}{C + D} \qquad (2)$$

$$0.7 \leq \left| \frac{Y - 0.045}{X} \right| \leq 1.0 \qquad (3)$$

where Xd is a side-shape coefficient of the vehicle installation outer side, Xc is a side-shape coefficient of the vehicle installation inner side, C and D are ground contact lengths of a ground contact surface of the tire at the vehicle installation inner side and the vehicle installation outer side, respectively, measured at positions spaced 40% of a ground contact width from the width center of the ground contact surface under a condition that the tire contacts the ground with a camber angle of -0.5 degree while the predetermined inner pressure and a predetermined load are applied thereto.

**Patentansprüche**

1. Spikeloser Reifen (10), bei dem in einem Schnitt, der durch eine Mittelachsenlinie (L) unter einem Zustand verläuft, wo der Reifen auf eine vorgegebene Felge montiert ist, und wo ein vorgegebener Innendruck darin aufgefüllt ist, angenommen wird, dass ein Abstand A von einem ersten winzig kleinen Vorsprung, der sich längs der Umfangsrichtung in einer Position auf der Oberfläche des Reifens, die einer Grenze zwischen dem Bladderring und der Seitenform entspricht, die die Vulkanisierform für das Vulkanisieren des Reifens bildet, bis zu einer Position erstreckt, wo eine maximale Reifenbreite entlang der radialen Reifenrichtung erhalten wird, und dass ein Abstand B von dem ersten winzig kleinen Vorsprung zum zweiten winzig kleinen Vorsprung gemessen wird, der sich längs der Umfangsrichtung in einer Position auf der Oberfläche des Reifens, die einer Grenze zwischen dem Laufflächenring und der Seitenform entspricht, die die Vulkanisierform für das Vulkanisieren des Reifens bildet, längs der radialen Reifenrichtung erstreckt, wobei ein Seitenformkoeffizient des Reifens, der als ein Verhältnis A/B in einem Zustand definiert wird, wo der Reifen auf einem Fahrzeug installiert ist, beträgt: zwischen 0,52 und 0,55 in einem halben Abschnitt in der Breitenrichtung, der auf einer Außenseite des Fahrzeuges in der Breitenrichtung, worauf man sich nachfolgend als die "Installationsaußenseite des Fahrzeuges" (Xd) bezieht; und zwischen 0,45 und 0,50 in einem halben Abschnitt in der Breitenrichtung, der auf einer Innenseite des Fahrzeuges in der Breitenrichtung angeordnet ist, worauf man sich hierin nachfolgend als die "Installationsinnenseite des Fahrzeuges" (Xc) bezieht; oder zwischen 0,5 und 0,55 in einem halben Abschnitt in der Breitenrichtung, der auf der Installationsaußenseite des Fahrzeuges angeordnet ist; und zwischen 0,45 und 0,48 in einem halben Abschnitt in der Breitenrichtung, der auf der Installationsinnenseite des Fahrzeuges angeordnet ist.

2. Spikeloser Reifen nach Anspruch 1, bei dem eine Umfangslänge entlang einer Innenfläche des Reifens im halben Abschnitt in der Breitenrichtung auf der Installationsaußenseite des Fahrzeuges größer ist und im halben Abschnitt in der Breitenrichtung auf der Installationsinnenseite des Fahrzeuges kürzer ist, und wobei eine Differenz zwischen den Umfangslängen nicht größer als 2 % ist.

**3.** Spikeloser Reifen nach Anspruch 1 oder 2, bei dem ein Grad der Asymmetrizität einer Seitenform X, ausgedrückt durch die Gleichung (1), und ein Grad der Asymmetrizität einer Kontaktform Y, ausgedrückt durch die Gleichung (2), eine Beziehung erfüllen, die durch die Gleichung (3) ausgedrückt wird:

$$X = \frac{Xd - Xc}{2} \qquad (1)$$

$$Y = \frac{C - D}{C + D} \qquad (2)$$

$$0.7 \leq \left| \frac{Y - 0.045}{X} \right| \leq 1.0 \qquad (3)$$

worin sind: Xd ein Seitenformkoeffizient der Installationsaußenseite des Fahrzeuges; Xc ein Seitenformkoeffizient der Installationsinnenseite des Fahrzeuges; C und D Reifenaufstandslängen einer Reifenaufstandsfläche des Reifens jeweils auf der Installationsinnenseite des Fahrzeuges und der Installationsaußenseite des Fahrzeuges, gemessen in Positionen, die 40 % einer Reifenaufstandsbreite vom Breitenmittelpunkt der Reifenaufstandsfläche unter einer Bedingung beabstandet sind, dass der Reifen den Boden mit einem Radsturzwinkel von -0,5 Grad berührt, während der vorgegebene Innendruck und eine vorgegebene Last dabei zur Anwendung gebracht werden.

**Revendications**

**1.** Bandage pneumatique non clouté (10), dans lequel, dans une section traversant une ligne axiale centrale (L), dans un état où le bandage pneumatique est monté sur une jante prédéterminée, une pression interne prédéterminée y étant remplie, en supposant qu'une distance A est mesurée d'une première saillie minuscule, s'étendant le long de la direction circonférentielle, au niveau d'une position sur la surface du bandage pneumatique correspondant à une limite entre la bague de vessie et le moule latéral, constituant le moule de vulcanisation pour vulcaniser le bandage pneumatique, vers une position au niveau de laquelle une largeur maximale du bandage pneumatique est établie le long de la direction radiale du bandage pneumatique, une distance B étant mesurée de la première saillie minuscule vers une deuxième saillie minuscule, s'étendant le long de la direction circonférentielle, au niveau d'une position sur la surface du bandage pneumatique correspondant à une limite entre la bague de la bande de roulement et le moule latéral, constituant le moule de vulcanisation pour vulcaniser le bandage pneumatique le long de la direction radiale du bandage pneumatique, un coefficient de forme du côté du bandage pneumatique, défini comme un rapport A/B, dans un état dans lequel le bandage pneumatique est installé sur un véhicule, est compris entre 0,52 et 0,55 dans une demi-partie dans le sens de la largeur, agencée au niveau d'un côté externe dans le sens de la largeur du véhicule, appelé ci-dessous « côté externe d'installation sur le véhicule » (Xd), et entre 0,45 et 0,50 dans une demi-partie dans le sens de la largeur, agencée au niveau d'un côté interne dans le sens de la largeur du véhicule, appelé ci-dessous « côté interne d'installation sur le véhicule » (Xc), ou entre 0,5 et 0,55 dans une demi-partie dans le sens de la largeur, agencée au niveau du côté externe d'installation sur le véhicule, et entre 0,45 et 0,48 dans une demi-partie dans le sens de la largeur, agencée au niveau du côté interne d'installation sur le véhicule.

**2.** Bandage pneumatique non clouté selon la revendication 1, dans lequel une longueur périphérique le long d'une surface interne du bandage pneumatique est plus longue dans la demi-partie dans le sens de la largeur dans le côté externe d'installation sur le véhicule, et plus courte dans la demi-partie dans le sens de la largeur dans le côté interne d'installation sur le véhicule, une différence entre les longueurs périphériques n'étant pas supérieure à 2%.

**3.** Bandage pneumatique non clouté selon les revendications 1 ou 2, dans lequel un degré d'asymétrie d'une forme de côté X, exprimé par l'équation (1), et un degré d'asymétrie d'une forme de contact Y, exprimé par l'équation (2) satisfont une relation exprimée par l'équation (3) :

$$X = \frac{Xd - Xc}{2} \qquad (1)$$

$$Y = \frac{C - D}{C + D} \qquad (2)$$

$$0.7 \leq \left| \frac{Y - 0.045}{X} \right| \leq 1.0 \qquad (3)$$

où Xd représente un coefficient de forme de côté du côté externe d'installation sur le véhicule, Xc représentant un coefficient de forme de côté du côté interne d'installation sur le véhicule, C et D représentant respectivement des longueurs de contact au sol d'une surface de contact au sol du bandage pneumatique au niveau du côté interne d'installation sur le véhicule et du côté externe d'installation sur le véhicule, mesurées au niveau de positions espacées du centre de la largeur de la surface de contact au sol d'une distance représentant 40% d'une largeur de contact au sol, dans un état dans lequel le bandage pneumatique contacte le sol à un angle de carrossage de -0,5 degré, la pression interne prédéterminée et une charge prédéterminée y étant appliquées.

# *FIG. 1*

## FIG. 2

# FIG. 3

| Vehicle installation inner side | | Vehicle installation outer side |

L

C — · — · — · — · — · — · — · — · — D

0. 4W    0. 4W

W

**EP 2 248 681 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2007176417 A

- JP 61188203 A